Europäisches Patentamt

European Patent Office

Office européen des brevets

(11) Publication number: **0 187 595**
A2

(12)

# EUROPEAN PATENT APPLICATION

(21) Application number: **85402543.4**

(22) Date of filing: **18.12.85**

(51) Int. Cl.⁴: **H 01 G 9/08**

(30) Priority: **24.12.84 US 685504**

(43) Date of publication of application:
**16.07.86 Bulletin 86/29**

(84) Designated Contracting States:
**CH DE FR GB LI NL SE**

(71) Applicant: **SANGAMO WESTON, INC.**
**180 Technology Drive**
**Norcross Georgia 30092(US)**

(72) Inventor: **Looper, Rick**
**Route 1 Box 391-A**
**Pickens South Carolina 29671(US)**

(74) Representative: **Chareyron, Lucien et al,**
**Schlumberger Limited Service Brevets c/o Giers 12, place**
**des Etats Unis B.P. 121**
**F-92124 Montrouge Cédex(FR)**

(54) Protective coating for electrolytic capacitor.

(57) A continuous protective, conformal epoxy coating is applied to an electrolytic capacitor by dipping the capacitor into a fluidized bed of an epoxy power. Preferably, the capacitor is preheated to a temperature at or above the flow point of the epoxy material so that the epoxy power partially melts and clings to the exterior of the capacitor. The exterior of the coated capacitor is then reheated to fully melt the coating and then allowed to harden. The resulting article is completely sealed from the environment so that contaminants, such as cleaning agents used to clean a printed circuit board to which the finished capacitor is mounted, cannot enter the capacitor to contaminate the electrolyte or otherwise degrade the capacitor's performance.

FIG. 2

EP 0 187 595 A2

## PROTECTIVE COATING FOR ELECTROLYTIC CAPACITOR

Background of the Invention

1. Field of the Invention

The invention relates to the field of electrolytic capacitors and, more particularly, to a method of applying a continuous, conformal protective coating to a capacitor which includes a liquid electrolyte, and to the article resulting therefrom.

2. Description of the Prior Art

Electrolytic capacitors are well known and generally comprise at least a pair of conductive plates separated by a porous dielectric spacer film. In a so-called "wet" type of electrolytic capacitor, the plates and spacer film are disposed within the housing, such as cylindrical aluminum can, and the housing is filled with a liquid electrolyte. When an electrical potential is applied between the two plates, the molecules of the electrolyte are disassociated into its anionic and cationic components which move to the positive and negative plates, respectively. This arrangement enables a higher capacitance to be produced in a smaller, more compact package.

One problem associated with prior art "wet" electrolytic capacitors (i.e. those using a liquid electrolyte) is that the capacitor plate and electrolyte must all be sealed from the environment, otherwise the electrolyte will be lost or otherwise contaminated, resulting in poor performance or failure of the capacitor. Two approaches have been used to seal wet electrolytic capacitors. In the first, represented by Peck et al, U.S. Patent No. 3,353,072, the spacer film between capacitor plates is impregnated with an electrolyte, a sealing agent is applied over the plates and spacer film, and the plates and spacer film are then directly dipped into an epoxy compound to form a protective coating over the plates and spacer film. It is also known to apply a protective epoxy coating over the capacitor plates and spacer film prior to impregnation with a liquid electrolyte, such as shown in Clement, U.S. Patent No. 4,035,905. Other patents of interest with respect to showing molded housings for electrolytic capacitors include U.S. Patent Nos. 3,436,610, 3,261,902, 2,970,182, 2,869,052 and 2,628,271.

However, all of the above cited examples of prior art capacitor coating techniques suffer from the drawback that the molding compound is applied directly to the capacitor windings (comprised of the capacitor plates and spacer films). When using a liquid electrolyte, this means that the capacitor windings and liquid electrolyte must be protected from the effects of the plastic or epoxy molding compound being applied directly to the capacitor windings. Unless the liquid electrolyte is introduced only after the molding compound has been applied, as is done in the above-cited Clement patent, some loss or contamination of the liquid electrolyte is inevitable. Introducing the liquid electrolyte after molding has taken place, as is described in the Clement patent, requires that a special opening be maintained in the molded housing to later introduce the liquid electrolyte. In addition, liquid electrolyte must be introduced under pressure to ensure that it completely impregnates the spaces between the wound capacitor plates.

The above arrangements, in which the capacitor windings are directly encapsulated, are feasible only for capacitors of relatively small size. For larger capacitors, direct coating of the capacitor windings is not practical. For these types of electrolytic capacitors, a lightweight, but rigid housing is utilized into which the capacitor windings and liquid electrolyte are disposed. Leads from the capacitor plates are brought out through a header, formed from an insulating material, such as Bakelite, Neoprene, Nylon, etc., which is sized to snugly fit into the open end of the housing. The header is sealed to the housing either by means of a gasket which forms a friction or snap fit with the end of the housing, or the end of the housing is crimped directly into the resilient header material.

In order to insure that contaminants from the environment do not enter through the crimped or gasketed seal or through the terminal openings, an epoxy coating is often applied to the header area to seal and protect it. This coating step is performed by applying the liquid epoxy resin to the surface of the header to a thickness of a millimeter or so and then letting the epoxy "cure" or dry.

The housing of these types of capacitors is often made from aluminum or an aluminum alloy since this material is lightweight, economical, and relatively stable when contacted by the common types of liquid electrolytes used in these capacitors. It is desirable, from the viewpoint of electrical safety, to provide the exterior of such a housing with an insulative coating so that there will not be a possibility of electrical contact or arcing between the capacitor housing and nearby electrical components when mounted to a circuit board or electrical chassis. One approach to providing such a protective layer has been to apply a sleeve of a polyvinyl chloride (PVC) material over the outside of the housing. When heat is applied to the exterior of the housing, the PVC sleeve shrinks somewhat to form a tight fit over all but the header and opposite end of the capacitor housing.

It will be appreciated that the foregoing techniques for protecting the electrolytic capacitor require several time-consuming steps in order to provide a protective, insulating layer for both the header area and the outside of the rigid housing. In addition, such prior art techniques do not completely seal the exterior of the capacitor housing and header, thus leaving the area between the housing and header and terminals as potential entryways for contamination.

## Summary of the Invention

A general object of the invention is to provide an electrolytic capacitor having an improved seal and a method for making same.

This and other objects are attained, in accordance with one aspect of the invention by an electrolytic capacitor comprising a rigid housing having an opening formed therein, at least a pair of capacitor plates disposed within the housing, a liquid electrolyte disposed within the housing and in contact with the capacitor plates, a header disposed within and entirely filling the housing opening, the header bearing electrical terminals disposed exterior to the header and connected to the capacitor plates, and comprising a continuous, conformal protective coating applied over the entire exterior surface of the housing and header.

Another aspect includes a method of coating an electrolytic capacitor of the type including a housing having an opening formed therein, at least a pair of capacitor plates disposed within the housing, a liquid electrolyte disposed within the housing and in contact with the capacitor plates, and a header disposed within and entirely filling the housing opening, the header bearing electrical terminals disposed exterior to the header and connected to the capacitor plates, comprising the steps of: (a) dipping the entire assembled capacitor at least one time into a fluid bed of protective material; and (b) curing the protective material on the exterior of the capacitor after the dipping step to form a continuous, conformal protective coating thereon.

## Brief Description of the Drawing Figures

These and other features and advantages of the present invention will be apparent from the following description of the preferred embodiment, when taken in conjunction with the accompanying drawing figures wherein:

Fig. 1 is a cross-sectional view of an electrolytic capacitor produced in accordance with the method of the present invention;

Fig. 2 is a perspective view of apparatus for performing the method of the present invention; and

Fig. 3 is a flow chart showing the steps which are performed in accordance with the principles of the present invention.

## Detailed Description of the Preferred Embodiment

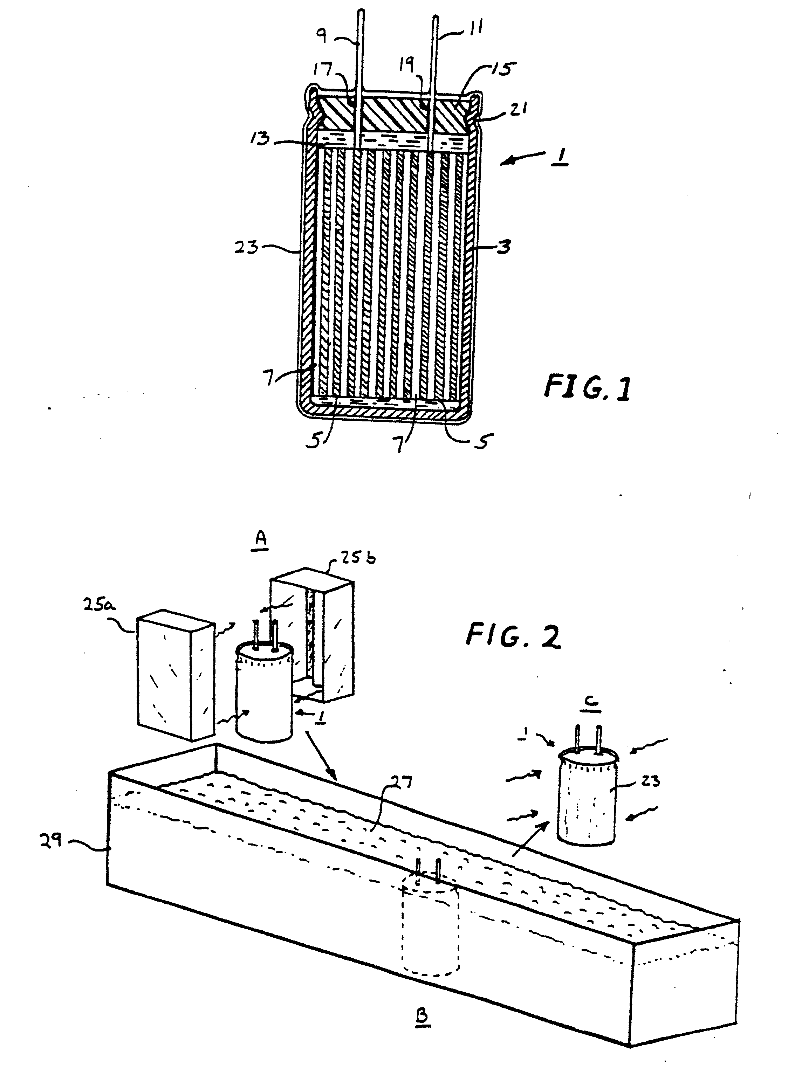

Fig. 1 shows a capacitor 1 which comprises an outer housing 3 of generally cylindrical shape having a closed end and an open end. The housing is preferably formed from a rigid, yet lightweight, material such as aluminum or an alloy thereof. Disposed within the housing are capacitor plates 5 and spacer films 7 arranged between the plates. The plates are formed from a thin sheet of electrically conductive material, such as aluminum foil, and the spacer films are formed from a porous dielectric material, such as paper. In the usual arrangement, there are two plates and at least two spacer films interleaved with each other. The plates and spacer films are wound on a mandrel (not shown) in a well-known fashion to form a tubular package of capacitor windings. Each capacitor plate has connected thereto respective terminals 9 and 11.

Also disposed within housing 3 is a liquid electrolyte 13, which preferably is a conventional liquid electrolyte or a gel-type electrolyte. Such electrolytes are well known and need not be further discussed here.

After the capacitor windings (comprised of plates 5 and spacer films 7 and electrolyte 13) have been disposed within the interior of housing 3, a header 15 is inserted into the open end of the housing.

Header 15 preferably is a cylindrical or disk-like plug which is sized to fit snugly within the open end of housing 3. The header may be formed from a variety of insulating materials, such as ethylene propylene rubber, Neoprene, Bakelite, Nylon, etc. Header 15 includes at least a pair of openings 17 and 19 for receiving terminals 9 and 11, respectively.

By way of example, header 15 is sealed within the open end of housing 3 by crimping a groove 21 into the surface of housing 3 adjacent header 15 so as to securely grip the header around its periphery. Of course it will be understood that other techniques for sealing a header to the open end of a capacitor housing are well known and could be utilized in the present invention in lieu of the crimped seal shown.

The primary feature of the present invention is the provision of a continuous, conformal protective and insulative coating 23 which is applied to the entire exterior surface of capacitor 1. Coating 23 is applied through a simple dipping operation, to be described in more detail below, and prevents the inflow of contaminants into the interior of the capacitor either through openings 17 or 19 or at the crimped seal around the periphery of header 15. For example, these contaminants could be the harsh cleaning agents (such as those containing active halogenated components) used to clean printed circuit boards after a wave soldering operation is performed on a circuit board to which the capacitor is mounted.

Referring now to Fig. 2, there is shown one technique by which conformal protective coating 23 may be applied to capacitor 1. Capacitor 1 is initially carried by its terminals, by means of a pair of gripper fingers or the like (not shown), between a pair of radiant heaters 25a, 25b which heat the exterior surface of capacitor 1 to a temperature at or above the flow point temperature of the protective coating material. A single radiant heater may be used if capacitor 1 is rotated so as to uniformly heat its exterior surface.

The protective coating material which is to form coating 23 on capacitor 1 takes the form of a powder 27 disposed in a fluidized bed apparatus 29. Such devices are well known and include means for vibrating the container into which the powdered material is disposed. This causes the powdered material to be constantly agitated and insures uniform coating of an object which is dipped into the material.

Subsequent to the heating step, capacitor 1 is immersed into powdered protective material 27 (except for a short portion of the free ends of terminals 9 and 11). Since the exterior of capacitor 1 is at or above the flow point temperature of the powdered protective material, this material partially melts and clings to the exterior surface of capacitor 1. The capacitor is then removed from the powdered protective material 29 and the partially melted powdered protective material 27 clinging to the exterior of the capacitor is then briefly exposed to heat at a temperature at or slightly above the flowpoint of the protective material. This heating and curing step causes the protective material to fully melt and uniformly coat the exterior of the capacitor to form conformal protective coating 23.

If desired, after the initial heating, dipping and curing steps have taken place, the coated capacitor may be reimmersed in the material a second time to increase the thickness of conformal protective coating 23 over the exterior of capacitor 1.

After the final dipping step is carried out, the capacitor is cured (reheated) a final time and set aside to allow coating 23 to fully harden.

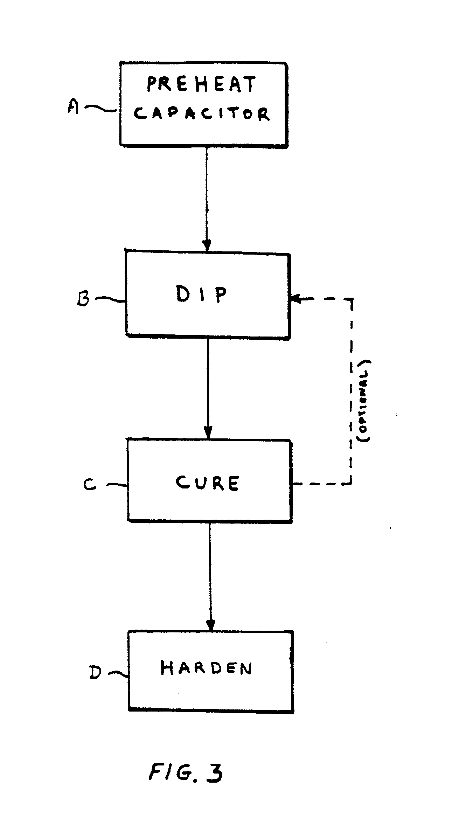

Fig. 3 summarizes the steps in applying conformal protective coating 23 to capacitor 1 which are described above with respect to Fig. 2. In step A, the capacitor is heated to a temperature at or above the flow point of the powdered protective material 27. In step B, the heated capacitor is dipped into the powdered protective material 27. Subsequent to this step the coated capacitor may be cured (step C) and then allowed to harden (step D) or, optionally, may be dipped a second time (step B), then cured and allowed to harden (steps C and D). Preferably, the heating, dipping and curing steps are performed sequentially by automatic machinery (not shown) which controls the movement of capacitor 1 past the radiant heaters and the immersion and removal of capacitor 1 into and from the fluidized bed apparatus 29.

0187595

- 8 -

Preferably, the powdered protective material 27 which is used to produce conformal protective coating 23 is an epoxy resin, such as EPC81 epoxy powder, manufactured by the Morton-Thiokol Co. This epoxy resin is representative of the types of materials which can be used to produce the conformal protective coating 23. Epoxy was chosen because of its relatively high dielectric strength and its electrical insulating properties and because it is relatively impervious to chemical attack. Epoxy is also nonreactive with the aluminum alloy materials that capacitor housing 3 are usually formed from.

A primary advantage of the above-described method is that only a single coating step is required to completely protect the exterior of capacitor 1, including both the housing and header areas. This is in contrast to prior art techniques in which an epoxy protective coating is applied only to the exterior surface of the header and, subsequently, a protective PVC sleeve is shrink-fitted over the cylindrical surface of the housing. In addition to requiring extra steps, such prior art protective coating techniques do not provide a complete and continuous seal over the entire exterior surface of the capacitor. In particular, the PVC sleeve and the prior art epoxy coating applied over the header at the open end of the capacitor do not provide a continuous seal at the header end. This is precisely the area which is most subject to contact with harsh cleaning agents used in the printed circuit board cleaning process and is a known failure point for contaminant entry in these prior art capacitors. By applying a continuous, conformal protective coating over the entire exterior surface of the capacitor, such entry points for contaminants are eliminated by the present invention. In addition, since the capacitor is dipped after it is completely assembled, there is no need for leaving a fill hole so that electrolyte can be injected into the interior of the capacitor after encasement, as is done in certain other types of "wet" electrolytic capacitor coating methods. The present invention therefore provides a simple and economical way of applying a continuous, protective and insulative coating over the entire exterior of a wet electrolytic capacitor.

Example 1

Ten capacitors having one-half inch diameter housings formed from an aluminum alloy (2 S type aluminum) were manufactured utilizing a pair of aluminum foil plates interleaved between four layers of porous paper and wound to form a series of two concentric capacitor electrodes. A pair of terminals were applied to the plates and the capacitor electrodes were disposed within the aluminum housing. A dimethylformamide solvent-based electrolyte was introduced into the housing to impregnate the capacitor electrodes. A header formed from butyl rubber was press-fitted into the open of the housing. The header included two openings for receiving the terminals from the capacitor electrodes. The header was then secured to the housing by crimping a narrow groove into the exterior of the housing adjacent the header. The capacitors were manufactured to each have a nominal capacitance of 270 µF and rated for 25 VDC.

Radiant heat was then applied to the exterior of the assembled capacitor for approximately ten seconds to bring its exterior surface temperature to slightly above the flow point temperature of the coating material (approximately $100^0$C). The capacitor was then dipped into a fluidized bed of the coating material comprised of a powdered epoxy resin manufactured by Morton-Thiokol, and sold under its tradename EPC81. The epoxy resin powder was kept approximately at room temperature.

After immersion in the powdered epoxy resin for approximately two seconds, the capacitor was removed from the epoxy resin and radiant heat was again applied for ten seconds to bring the exterior surface temperature of the capacitor back up to or slightly above the flow point of the epoxy resin. The capacitor was then reimmersed into the fluidized bed of epoxy resin powder for approximately two seconds to coat it a second time. The capacitor was then removed from the epoxy resin powder, reheated to the flowpoint temperature of the epoxy material for approximately ten seconds, and then set aside to harden.

Example 2

Ten capacitors were constructed as described in Example 1, but rather than being coated with epoxy, a conventional polyvinyl chloride sleeve was shrink-fitted over their exterior and an epoxy coating, formed from a one-part epoxy manufactured by Mavidon Enterprises, under its tradename Uniset 906-46, was applied to the header area only of the capacitor.

The capacitance, DC leakage and equivalent series resistance (ESR) of the two groups of capacitors from Examples 1 and 2 were initially measured. The capacitors were then immersed for four hours in Freon ⱨ (Dupont type TMC) solvent to test each capacitor's ability to withstand solvent attack, then a life test was run by applying 25 VDC to the capacitors for 250 hours at $105^{o}$C. The capacitance, DC leakage, and ESR of each group of capacitors were subsequently measured.

Table 1 sets forth below a comparison of the capacitance, DC leakage and ESR of the two groups of capacitors before and after the life test.

Table 1

Epoxy Coated Capacitors (samples 1-10) Compared
with PVC Sleeved Capacitors (samples 11-20)

| Sample # | Initial Test | | | After 4 hours in Freon® TMC, followed by 250 hours @ 25VDC @ 105°C | | | |
|---|---|---|---|---|---|---|---|
| | Capacitance (μF) | DC Leakage (μA) | ESR (Ohms) | Capacitance (μF) | % change Capacitance | DC Leakage (μA) | ESR (Ohms) |
| 1 | 279.3 | 1.2 | 0.206 | 282.0 | +0.96 | 1.0 | 0.223 |
| 2 | 282.1 | 1.2 | 0.201 | 284.9 | +0.99 | " | 0.218 |
| 3 | 282.4 | 1.3 | 0.202 | 285.1 | +0.95 | " | 0.220 |
| 4 | 282.4 | 1.2 | 0.199 | 284.8 | +0.84 | " | 0.236 |
| 5 | 275.5 | 1.4 | 0.209 | 277.3 | +0.58 | " | 0.231 |
| 6 | 283.9 | 1.3 | 0.199 | 286.0 | +0.73 | " | 0.221 |
| 7 | 282.1 | 1.2 | 0.207 | 285.8 | +1.31 | " | 0.219 |
| 8 | 283.9 | 1.2 | 0.198 | 286.6 | +0.98 | " | 0.204 |
| 9 | 273.5 | 1.4 | 0.207 | 275.2 | +0.62 | " | 0.218 |
| 10 | 283.0 | 1.6 | 0.193 | 284.9 | +0.67 | " | 0.221 |
| 11 | 279.1 | 1.2 | 0.204 | 288.5 | +3.36 | 1.0 | 0.240 |
| 12 | 282.3 | 1.2 | 0.200 | 289.5 | +2.65 | 1.0 | 0.241 |
| 13 | 272.8 | 1.2 | 0.204 | 281.6 | +3.22 | 2.4 | 0.238 |
| 14 | 280.2 | 1.3 | 0.190 | 285.6 | +1.192 | 1.0 | 0.235 |
| 15 | 269.3 | 1.3 | 0.217 | 280.0 | +3.97 | 1.0 | 0.256 |
| 16 | 283.5 | 1.3 | 0.203 | 291.5 | +2.82 | 1.0 | 0.239 |
| 17 | 275.9 | 1.2 | 0.207 | 284.2 | +3.00 | 11.6[1] | 0.241 |
| 18 | 278.8 | 1.5 | 0.208 | 288.5 | +3.47 | 1.0 | 0.242 |
| 19 | 280.1 | 1.2 | 0.191 | 290.2 | +3.62 | 2.3 | 0.237 |
| 20 | 273.2 | 1.3 | 0.203 | 281.2 | +2.91 | 1.8 | 0.232 |

Note: (1) Internal examination showed pronounced corrosion.

- 12 -

A second group of ten capacitors were prepared in accordance with Example 1, above, and compared with a group of ten capacitors prepared in accordance with Example 2, above, and tested for dielectric strength (breakdown voltage) under an applied AC voltage. Table 2 sets forth the results of this test.

Table 2

AC Dielectric strength/AC Breakdown Voltage

| Sample # | Epoxy Coated Capacitors | PVC Sleeved Capacitors |
|---|---|---|
| 1 | 5800 Volts AC | 2500 Volts AC |
| 2 | 3600 | 2400 |
| 3 | 5400 | 1800 |
| 4 | 5500 | 1900 |
| 5 | 3200 | 2600 |
| 6 | 5900 | 2400 |
| 7 | 6000 | 2500 |
| 8 | 5800 | 2500 |
| 9 | 4900 | 3100 |
| 10 | 5200 | 2200 |

A third group of ten capacitors were prepared in accordance with Example 1, above, and compared with a group of ten capacitors prepared in accordance with Example 2, above, and tested for dielectric strength (breakdown voltage) under an applied DC voltage. Table 3 sets forth the results of this test.

- 13 -

## Table 3

### DC Dielectric Strength/DC Breakdown Voltage

| Sample # | Epoxy Coated Capacitors | PVC Sleeved Capacitors |
|----------|-------------------------|------------------------|
| 1 | 7000 Volts DC | 6200 Volts DC |
| 2 | 7900 | 6400 |
| 3 | 6100 | 5600 |
| 4 | 6500 | 6000 |
| 5 | 6400 | 5600 |
| 6 | 7000 | 6000 |
| 7 | 6800 | 5900 |
| 8 | 6900 | 4900 |
| 9 | 6500 | 6000 |
| 10 | 7000 | 6200 |

It is thus readily apparent that capacitors formed in accordance with the method of the present invention show superior resistance to contamination, stability in electrical characteristics, and improved dielectric strength over capacitors having only epoxy seals formed over their headers and PVC sleeves shrink-fitted over the cylindrical surface of the capacitor housing.

While the present invention has been described in considerable detail, it will be appreciated that various changes and modifications will occur to those skilled in the art. Accordingly, the foregoing is intended to be illustrative, but not limitive of the scope of the invention which is defined by the appended claims.

What is claimed is:

1.   An electrolytic capacitor comprising a rigid housing having an opening formed therein, at least a pair of capacitor plates disposed within the housing, a liquid electrolyte disposed within the housing and in contact with the capacitor plates, a header disposed within and entirely filling the housing opening, the header bearing electrical terminals disposed exterior to the header and connected to the capacitor plates, and characterized by a continuous, conformal protective coating applied over the entire exterior surface of the housing and header.

2.   The capacitor of claim 1 characterized in that the housing is substantially cylindrical in shape having one closed end and one open end, and wherein the header is a substantially cylindrical plug sized to snugly fit in the open end of the housing.

3.   The capacitor of claim 1 or 2 characterized in that the housing is formed from aluminum or an alloy thereof.

4.   The capacitor of claim 1, 2 or 3 characterized in that the capacitor plates comprise a series of concentric electrodes electrically connected to the terminals.

5.   The capacitor of any one of claims 1-4 characterized in that the conformal protective coating is formed from an epoxy resin.

6.   The capacitor of any one of claims 1-5 characterized in that the conformal protective coating is applied after the liquid electrolyte is completely introduced into the housing by dipping the assembled capacitor into a fluid bed of a protective material and subsequently curing the protective material on the exterior of the capacitor.

7.   A method of coating an electrolytic capacitor of the type including a housing having an opening formed therein, at least a pair of capacitor plates disposed within the housing, a liquid electrolyte disposed within the housing and in contact with the capacitor plates, and a header disposed within and entirely filling the housing opening, the header bearing electrical terminals disposed exterior to the header and connected to the capacitor plates, characterized by the steps of:

(a)   dipping the entire assembled capacitor at least one time into a fluid bed of protective material; and

(b)   curing the protective material on the exterior of the capacitor after the dipping step to form a continuous, conformal protective coating thereon.

8.   The method of claim 7 characterized in that the curing step comprises heating the exterior of the capactior to a temperature at or above the flow point of the protective material.

9.   The method of claim 7 or 8 characterized in that the protective material is an epoxy resin.

10.   The method of claim 9 characterized in that the epoxy resin takes the form of a powder disposed in a vibrating, fluidized bed apparatus.

11.   The method of any one of claims 7-10 characterized by the step of initially heating the exterior of the assembled capacitor to a temperature at or above the flow point of the protective material prior to the dipping step.

12.   The method of claim 11 characterized in that subsequent to a first dipping step, the exterior of the capacitor is reheated to a temperature at or above the flow point of the protective material.

- 16 -

0187595

13. The method of claim 12 characterized in that the capacitor is dipped at least a second time into the fluid bed of protective material after said reheating step.

14. The method of claim 13 characterized in that subsequent to the second dipping step, the exterior of the capacitor is reheated to a temperature at or above the flow point of the protective material.

FIG. 1

FIG. 2

0187595

FIG. 3